# EUROPEAN PATENT APPLICATION

(11) **EP 3 157 228 A1**
(43) Date of publication of application: **19.04.2017**
(21) Application number: 15806819.7
(22) Date of filing: 15.01.2015
(51) Int. Cl.: H04L 29/08

(54) **VEHICLE DETECTION METHOD, MOBILE TERMINAL, AND ON-BOARD TERMINAL**

(30) Priority: 12.06.2014 CN 201410260492
(71) Applicant: Launch Tech Company Limited, Shenzhen, Guangdong 518129 (CN)
(72) Inventor: LIU, Jun, Shenzhen Guangdong 518129 (CN); LV, Lin, Shenzhen Guangdong 518129 (CN)
(74) Representative: MERH-IP Matias Erny Reichl Hoffmann Patentanwälte PartG mbB
(86) International application number: PCT/CN2015/070721
(87) International publication number: WO 2015/188622

(57) **Abstract**

The present invention discloses a vehicle detection method, a mobile terminal, and an on-board terminal; the vehicle detection method comprises: the mobile terminal establishes a wireless connection with the on-board terminal, the on-board terminal being connected to the OBD of the vehicle; the mobile terminal sends a vehicle diagnostic command to the on-board terminal; the mobile terminal receives vehicle operating state data from the vehicle terminal, the vehicle operating state data comprising: under the instruction of the vehicle diagnostic command and by means of the OBD, the on-board terminal diagnoses the vehicle and obtains as a result of the operating state of the vehicle; according to the operating-state data of the vehicle, the mobile terminal generates a report on the operating state of the vehicle. The technical solution provided by the present invention facilitates the diagnosis of a vehicle by the vehicle owner.

## Description

### THCHNICAL FIELD

The present application relates to the technical field of vehicle detection, and more particularly, relates to a vehicle detecting method, a mobile terminal, and an on-board terminal.

### BACKGROUND

During the use process of a vehicle, with the extension of the using time (or with the increase of the running distance), the components of the vehicle may be abrased, be corroded, be deformed, and age gradually, and lubricating oil of the vehicle may metamorphose, so that cooperation pair clearance becomes larger, the problems such as loose movements, vibrations, abnormal sounding, air leakage, water leakage, oil leakage, and so on are prone to occur, and weaker technical performance of the vehicle may be caused. Therefore, it is quite necessary to provide the vehicle with periodical detections and maintenances.

At present, vehicle operating status information such as a vehicle travelling speed, a motor rotating speed, a motor temperature, a running distance, statuses of vehicle lamps, a vehicle travel time, a gear, statuses of safe belts, statuses of vehicle doors, and so on, are usually displayed on an instrument panel in the driving cabin of the vehicle; in order to know the whole operating status of the electronic control system of the vehicle, an owner of the vehicle has to go to an after-sales maintenance department of a car 4S shop or other car maintenance points, and performs a fault diagnostic for the vehicle using diagnostic tools provided by the manufacturer of the type of the car. Since the fault diagnosis service can only be performed at designated maintenance points, most car owners perform fault diagnosis services for their cars only when there is something wrong with their cars. However, when the cars break down, they have actually brought inconvenience into the trips of the car owners.

### BRIEF SUMMARY

The present application provides a vehicle detecting method, a mobile terminal and an on-board terminal configured to assist car owners to perform diagnoses for their vehicles.

In one aspect, the present invention provides a method for vehicle detection, comprising:
establishing a wireless connection between a mobile terminal and an on-board terminal, wherein, the on-board terminal is connected to an OBD of a vehicle;
via the mobile terminal, transmitting a vehicle diagnostic command to the vehicular vehicle;
via the mobile terminal, receiving vehicle operating status data from the on-board terminal, wherein, the vehicle operating status data includes a vehicle operating status result obtained by a diagnosis for the vehicle that is performed through the OBD and by the on-board terminal instructed by the vehicle diagnostic command; and
via the mobile terminal, generating a vehicle operating status report according to the vehicle operating status data.

In another aspect, the present invention provides a method for vehicle detection, comprising:
making an on-board terminal to be connected to an OBD of a vehicle;
establishing a wireless connection between the on-board terminal and a mobile terminal;
via the on-board terminal, receiving a vehicle diagnostic command from the mobile terminal;
via the on-board terminal, performing a diagnosis for the vehicle through the OBD to obtain a vehicle operating status result when the on-board terminal is instructed by the vehicle diagnostic command;
via the on-board terminal, transmitting vehicle operating status data including the vehicle operating status result to the mobile terminal.

In a third aspect, the present invention provides a mobile terminal, the mobile terminal comprises:
a first connecting module configured for establishing a wireless connection between the mobile terminal and an on-board terminal, wherein, the on-board terminal is connected to an OBD of a vehicle;
a first transmitting module configured for transmitting a vehicle diagnostic command to the on-board terminal;
a first receiving module configured for receiving a vehicle operating status data from the on-board terminal, wherein, the vehicle operating status data includes a vehicle operating status result obtained by a diagnosis for the vehicle that is performed through the OBD and by the on-board terminal instructed by the vehicle diagnostic command; and
a generating module configured for generating a vehicle operating status report according to the vehicle operating status data received from the receiving module.

In a fourth aspect, the present invention provides an on-board terminal, comprising:
a second connecting module configured for establishing a connection between the on-board terminal and an OBD of a vehicle;
a third connecting module, configured for establishing a wireless connection between the on-board terminal and a mobile terminal;
a second receiving module configured for receiving a vehicle diagnostic command from the mobile terminal;
a diagnosing module configured for performing a diagnosis for the vehicle through the OBD to obtain a vehicle operating status result when being instructed by the vehicle diagnostic command; and
a second transmitting module configured for transmitting a vehicle operating status data including the vehicle operating status result to the mobile terminal.

It can be known from the above-mentioned technical solution that a user of the present invention can establish a wireless connection between the mobile terminal and the on-board terminal and transmit the vehicle diagnostic command to the on-board terminal via the mobile terminal. Since the on-board terminal is connected to the OBD of the vehicle, the on-board terminal is able to perform a diagnosis for the vehicle through the OBD when it is instructed by the vehicle diagnostic command, and returns vehicle operating status data including the vehicle operating status result obtained by the diagnosis to the mobile terminal; the mobile terminal generates the vehicle operating status report according to the vehicle operating status result. In one aspect, by the technical solution of the present invention, the user of the vehicle can perform a detection for the vehicle by himself/herself via the mobile terminal and the on-board terminal merely, and can check the status of the whole electronic control system of the vehicle, so that the disadvantage that the fault diagnosis requires being performed at designated maintenance points is avoided, and much convenience for performing diagnoses for vehicles is brought to the users. In another aspect, the mobile terminal generates the vehicle operating status report according to the vehicle operating status data, and thereby enables the user to intuitively obtain the operating status of the electronic control system of the vehicle via the vehicle operating status report and further provides convenience for the user to grasp detailed operating status of the vehicle in real-time.

### BRIEF DESCRIPTION OF THE DRAWINGS

In order to explain the embodiments of the present invention or the technical solutions in the prior art more clearly, a brief introduction regarding the accompanying drawings that need to be used for describing the embodiments or the prior art is given below; it is obvious that the accompanying drawings described as follows are only some embodiments of the present invention, for those skilled in the art, other drawings can be obtained according to the current drawings on the premise of paying no creative labor.
FIG. 1 illustrates a schematic flow chart of a method for vehicle detection according to one embodiment of the present invention;
FIG. 2 illustrates a schematic flow chart of a method for vehicle detection according to another embodiment of the present invention;
FIG. 3 illustrates a schematic block diagram of a mobile terminal according to one embodiment of the present invention;
FIG. 4 illustrates a schematic block diagram of an on-board terminal according to another embodiment of the present invention.

### DETAILED DESCRIPTION OF THE PREFERRED EMBODIMENT

In order to make the purpose, the technical features, and the advantages of the present invention be clearer, the present application will be described in detail with reference to the accompanying drawings and embodiments. It is obvious that the described embodiments are not all embodiments but only some embodiments of the present invention. On the basis of the embodiments in the present invention, all other embodiments obtained by those skilled in the art on the premise of paying no creative labor are within the protection scope of the present invention.

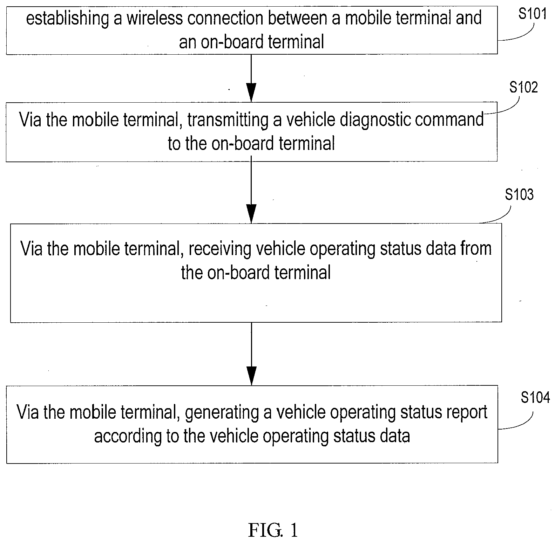

A method for vehicle detection of an embodiment of the present invention is described below, wherein a mobile terminal is considered as a main body for description; please refer to figure 1, the method for vehicle detection of the embodiment of the present invention comprises:
step 101, establishing a wireless connection between a mobile terminal and an on-board terminal of a vehicle;
wherein, the on-board terminal is connected to an OBD (On-Board Diagnostics) of the vehicle.

Optionally, the on-board terminal of the embodiment of the present invention is a golo device, the golo device can collect various operating data of the whole system of the vehicle such as fault information, data flows, position information, vehicle statuses, and so on, and thereby achieve various vehicle applications such as real-time remote diagnosis, professional vehicle detection, vehicle warning alerting, car owner life community, map locating service, and so on. In the embodiment of the present invention, a plug of the golo device is inserted in an interface of the OBD of the vehicle, thereby realizing the connection between the golo device and the OBD of the vehicle.

The mobile terminal establishes the wireless connection with the on-board terminal, and the type of the wireless connection can be, for example, Bluetooth. Particularly, the on-board terminal of the embodiment of the present invention is a golo3 device (that is, the third generation golo device), since the golo 3 device supports Wi-Fi (Wireless-Fidelity) technology, the mobile terminal can establish the wireless connection with the golo3 device via not only Bluetooth but also Wi-Fi technology.

In the embodiment of the present invention, the mobile terminal can establish the wireless connection with the on-board terminal via a client-side installed in the mobile terminal and matching with the above-mentioned on-board terminal. For example, supposing that the on-board terminal is a golo device, a user can install a golo client-side in the mobile terminal, and actuates the golo device after the golo client-side is installed successfully (under some circumstances, it is necessary for the user to login the golo client-side via a registered user name and a code), after the connection between the golo device and the OBD of the vehicle is confirmed, the user can establish the wireless connection between the golo client-side and the on-board terminal via Bluetooth, Wi-Fi, or other golo devices and mobile terminals supporting the wireless connection. It needs to note that the user needs to select the type of the vehicle connected with the golo device in the golo client-side when the user uses the golo client-side of the mobile terminal for the first time, so that the configuration documents of the vehicle type selected by the user can be loaded by the golo client-side.

Step 102, transmitting a vehicle diagnostic command from the mobile terminal to the on-board terminal;

The above-mentioned vehicle diagnostic command is used for instructing the on-board terminal to provide a diagnosis for the vehicle connecting with the on-board terminal.

Step 103, via the mobile terminal, receiving vehicle operating status data from the on-board terminal;
wherein, the above-mentioned vehicle operating status data includes the vehicle operating status result obtained by a diagnosis for the vehicle that is performed through the OBD and by the on-board terminal instructed by the vehicle diagnostic command.

It needs to note that as the vehicle diagnostic process performed by the on-board terminal and via the OBD belongs to the prior art, the vehicle diagnostic process performed by the on-board terminal and via the OBD is not repeated in the embodiment of the present invention herein.

After the vehicle operating status result is obtained by the on-board terminal via performing a diagnosis for the vehicle, the vehicle operating status data is transmitted to the mobile terminal via the wireless connection (such as Bluetooth or Wi-Fi) established with the mobile terminal in step 101.

Step 104, via the mobile terminal, generating a vehicle operating status report according to the vehicle operating status data.

In the embodiment of the present invention, when the mobile terminal receives the vehicle operating status data from the on-board terminal, it analyses and processes the vehicle operating status data, and generates the vehicle operating status report in an electronic version; the vehicle operating status report can show a whole operating status of the electronic control system of the vehicle.

Optionally, the mobile terminal generates the vehicle operating status report in a PDF format, of course, the mobile terminal can also generate vehicle operating status reports in other document formats according to the vehicle operating status data, for example, the mobile terminal can generate vehicle operating status reports in the form of word format, excel format, txt format, or jpg figure format according to the vehicle operating status data, and the formats are not limited herein.

Optionally, since the generated vehicle operating status report is in the electronic version, the mobile terminal can transmit the vehicle operating status report via email, or, the mobile terminal can store the generated vehicle operating status report locally or upload the generated vehicle operating status report to a server.

It needs to note that the mobile terminal in the embodiment of the present invention includes but is not limited to intelligent terminal devices such as a smart phone, a tablet computer, a notebook, and so on.

It can be known from what mentioned above that a user of the present invention can establish a wireless connection between the mobile terminal and the on-board terminal and transmit the vehicle diagnostic command to the on-board terminal via the mobile terminal, since the on-board terminal is connected to the OBD of the vehicle, the on-board terminal is able to perform a diagnosis for the vehicle through the OBD when it is instructed by the vehicle diagnostic command and returns vehicle operating status data including the vehicle operating status result obtained by the diagnosis to the mobile terminal, the mobile terminal generates vehicle operating status reports according to the vehicle operating status result. In one aspect, by the technical solution of the present invention, the user of the vehicle can perform a detection for the vehicle by himself/herself via the mobile terminal and the on-board terminal merely, and can check the status of the whole electrical control system of the vehicle, so that the disadvantage that fault diagnosis requires being performed in designated vehicle maintenance points is avoided, and much convenience for performing diagnoses for vehicles is brought to the users. In another aspect, the mobile terminal generates the vehicle operating status reports according to the vehicle operating status data, and the vehicle operating status report enables the user to intuitively obtain the operating status of the electronic control system and further provides convenience for the user to grasp detailed operating status of the vehicle in real-time.

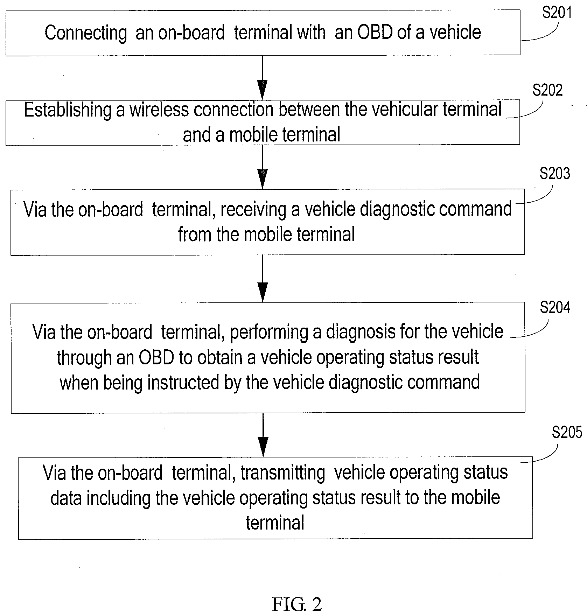

A method for vehicle detection of another embodiment of the present invention is described below, wherein an on-board terminal is considered as a main body for description. Please refer to figure 2, the method for vehicle detection in the embodiment of the present invention comprises:
step 201, connecting the on-board terminal with an OBD of the vehicle.

Optionally, the on-board terminal in the embodiment of the present invention is a golo device, the golo device can collect various operating data of the whole system of the vehicle such as fault information, data flow, position information, vehicle status, and so on, thereby achieve various vehicle applications such as real-time remote diagnosis, professional vehicle detection, vehicle warning alerting, car owner life community, map locating service, and so on. In the embodiment of the present invention, a plug of the golo device is inserted into an interface of the OBD thereby realizing the connection between the golo device and the OBD of the vehicle.

Step 202, the on-board terminal establishes a wireless connection with the mobile terminal;
a wireless connection between the mobile terminal and the on-board terminal is established, the type of the wireless connection can be, for example, Bluetooth. Particularly, the on-board terminal of the embodiment of the present invention is the golo3 device (that is, the third generation golo device), since the golo 3 device supports Wi-Fi technology (Wireless-Fidelity), thus, the wireless connection between the mobile terminal and the golo3 device can be established via not only both Bluetooth but also Wi-Fi technology.

Step 203, via the mobile terminal, receiving a vehicle diagnostic command from the mobile terminal.

Step 204, under instruction of the vehicle diagnostic command, the vehicular performs a diagnosis for the vehicle via the OBD, and thereby obtains a vehicle operating status result.

It needs to note that since the vehicle diagnostic process performed by the on-board terminal and via the OBD belongs to the prior art, the vehicle diagnostic process performed by the on-board terminal and via the OBD is not repeated in the embodiment of the present invention herein.

Step 205, via the on-board terminal, transmitting the vehicle operating status data including the vehicle operating status result to the mobile terminal.

After the on-board terminal obtains the vehicle operating status result, transmitting the vehicle operating status data to the mobile terminal via the wireless connection (such as Bluetooth or Wi-Fi ) established with the mobile terminal in step 202, so that the mobile terminal generates the vehicle operating status report according to the vehicle operating status data.

It needs to note that the mobile terminal in the embodiment of the present invention includes but is not limited to intelligent terminal devices such as a smart phone, a tablet computer, a notebook, and so on.

It is obvious from what mentioned above that a user of the present invention can establish a wireless connection between the mobile terminal and the on-board terminal and transmit the vehicle diagnostic command to the on-board terminal via the mobile terminal, since the on-board terminal is connected to the OBD of the vehicle, the on-board terminal is able to perform a diagnosis for the vehicle through the OBD when it is instructed by the vehicle diagnostic command and returns vehicle operating status data including the vehicle operating status result obtained by the diagnosis to the mobile terminal, the mobile terminal generates vehicle operating status reports according to the vehicle operating status result. In one aspect, by the technical solution of the present invention, the user of the vehicle can perform a detection for the vehicle by himself/herself via the mobile terminal and the on-board terminal merely, and can check the status of the whole electrical control system of the vehicle, so that the disadvantage that fault diagnosis requires being performed in designated vehicle maintenance points is avoided, and much convenience for performing diagnoses for vehicles is brought to the users. In another aspect, the mobile terminal generates the vehicle operating status reports according to the vehicle operating status data, and the vehicle operating status report enables the user to intuitively obtain the operating status of the electronic control system and further provides convenience for the user to grasp detailed operating status of the vehicle in real-time.

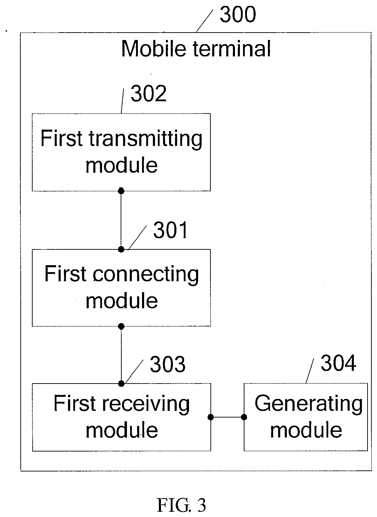

One embodiment of the present invention further provides a mobile terminal; please refer to figure 3, a mobile terminal 300 in the embodiment of the present invention comprises:
a first connecting module 301 configured for establishing a wireless connection between the mobile terminal 300 and an on-board terminal, wherein, the on-board terminal is connected to an OBD of a vehicle;
a first transmitting module 302 configured for transmitting a vehicle diagnostic command to the on-board terminal;
a first receiving module 303 configured for receiving a vehicle operating status data from the on-board terminal, wherein, the vehicle operating status data includes a vehicle operating status result obtained by performing a diagnosis for the vehicle through the OBD when it is instructed by the vehicle diagnostic command; and
a generating module 304 configured for generating a vehicle operating status report according to the vehicle operating status data received from the first receiving module 303.

Optionally, the generating module 304 is configured for generating the vehicle operating status report in a PDF format according to the vehicle operating status data received by the first receiving module 303. Of course, the generating module 304 can also generate vehicle operating status reports in other document formats according to the vehicle operating status data, for example, the generating module 304 can generate vehicle operating status reports in the form of word format, excel format, txt format, or jpg figure format and so on according to the vehicle operating status data, and the formats are not limited herein.

Optionally, the on-board terminal of the embodiment of the present invention is a golo device, the golo device can collect various operating data of the whole system of the vehicle such as fault information, data flow, position information, vehicle status, and so on, thereby achieving various vehicle applications such as real-time remote diagnosis, professional vehicle detection, vehicle warning alerting, car owner life community, map locating service, and so on. In the embodiment of the present invention, a plug of the golo device is inserted into an interface of the OBD, thereby realizing the connection between the golo device and the OBD of the vehicle. In particular, the on-board terminal is golo3 device, since golo3 device supports Wi-Fi technology, therefore, the first connecting module 301 can be specifically configured for establishing a Wi-Fi connection between the mobile terminal 300 and the on-board terminal.

It needs to note that the mobile terminal in the embodiment of the present invention includes but is not limited to intelligent terminal devices such as a smart phone, a tablet computer, a notebook, and so on. The mobile terminal in the embodiment of the present invention can be the mobile terminals used in the above-mentioned method embodiments, and can be used for realizing all technical solutions of the above-mentioned method embodiments; in regard to the specific realizing process of every function module of the mobile terminal in the embodiment of the present invention, please refer to relevant descriptions in the above-mentioned apparatus embodiment of the present invention, and they are not repeated herein.

It is obvious from what mentioned above that a user of the present invention can establish a wireless connection between the mobile terminal and the on-board terminal and transmit the vehicle diagnostic command to the on-board terminal via the mobile terminal, since the on-board terminal is connected to the OBD of the vehicle, the on-board terminal is able to perform a diagnosis for the vehicle through the OBD when it is instructed by the vehicle diagnostic command and returns vehicle operating status data including the vehicle operating status result obtained by the diagnosis to the mobile terminal, the mobile terminal generates vehicle operating status reports according to the vehicle operating status result. In one aspect, by the technical solution of the present invention, the user of the vehicle can perform a detection for the vehicle by himself/herself via the mobile terminal and the on-board terminal merely, and can check the status of the whole electrical control system of the vehicle, so that the disadvantage that fault diagnosis requires being performed in designated vehicle maintenance points is avoided, and much convenience for performing diagnoses for vehicles is brought to the users. In another aspect, the mobile terminal generates the vehicle operating status reports according to the vehicle operating status data, and the vehicle operating status report enables the user to intuitively obtain the operating status of the electronic control system and further provides convenience for the user to grasp detailed operating status of the vehicle in real-time.

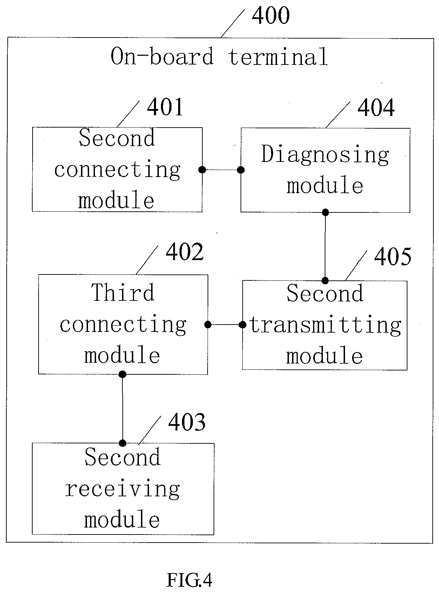

One embodiment of the present invention further provides an on-board terminal, please refer to figure 4, the on-board terminal 400 in the embodiment of the present invention comprises:
a second connecting module 401 configured for establishing a connection between the on-board terminal 400 and an OBD of a vehicle;
a third connecting module 402 configured for establishing a wireless connection between the on-board terminal and a mobile terminal;
a second receiving module 403 configured for receiving a vehicle diagnostic command from the mobile terminal;
a diagnosing module 404 configured for performing a diagnosis for the vehicle through the OBD to obtain a vehicle operating status result when being instructed by the vehicle diagnostic command; and
a second transmitting module 405 configured for transmitting a vehicle operating status data including the vehicle operating status result to the mobile terminal.

Optionally, the on-board terminal in the embodiment of the present invention is a golo device, the golo device can collect various operating data of the whole system of the vehicle such as fault information, data flow, position information, vehicle status, and so on, thereby realizing various vehicle applications including real-time remote diagnosis, professional vehicle detection, vehicle warning alerting, car owner life community, map locating service, and so on. In the embodiment of the present invention, the connection between the golo device and the OBD of the vehicle can be established by the second connecting module 401 via inserting a plug of the golo device to the OBD of the vehicle.

Optionally, the on-board terminal in the embodiment of the present invention is the golo device, the third connecting module 402 is specifically configured for establishing a Wi-Fi connection between the on-board terminal 401 and the mobile terminal.

It needs to note that the mobile terminal in the embodiments of the present invention includes but is not limited to intelligent terminal devices such as a smart phone, a tablet computer, a notebook, and so on.

It needs to note that the mobile terminal in the embodiment of the present invention can be the mobile terminals used in the above-mentioned method embodiments, and can be used for realizing all technical solutions of the above-mentioned method embodiments; in regard to the specific realizing process of every function module of the mobile terminal in the embodiment of the present invention, please refer to relevant descriptions in the above-mentioned apparatus embodiment of the present invention, and they are not repeated herein.

It is obvious from what mentioned above that a user of the present invention can establish a wireless connection between the mobile terminal and the on-board terminal and transmit the vehicle diagnostic command to the on-board terminal via the mobile terminal, since the on-board terminal is connected to the OBD of the vehicle, the on-board terminal is able to perform a diagnosis for the vehicle through the OBD when it is instructed by the vehicle diagnostic command and returns vehicle operating status data including the vehicle operating status result obtained by the diagnosis to the mobile terminal, the mobile terminal generates vehicle operating status reports according to the vehicle operating status result. In one aspect, by the technical solution of the present invention, the user of the vehicle can perform a detection for the vehicle by himself/herself via the mobile terminal and the on-board terminal merely, and can check the status of the whole electrical control system of the vehicle, so that the disadvantage that fault diagnosis requires being performed in designated vehicle maintenance points is avoided, and much convenience for performing diagnoses for vehicles is brought to the users. In another aspect, the mobile terminal generates the vehicle operating status reports according to the vehicle operating status data, and the vehicle operating status report enables the user to intuitively obtain the operating status of the electronic control system and further provides convenience for the user to grasp detailed operating status of the vehicle in real-time.

In some embodiments provided by the present application, it should be understood that the apparatus and the method disclosed can be achieved in other ways. For example, the aforementioned apparatus embodiments are schematic merely, for example, the division of the aforementioned units is just a kind of logic function division, some other divisions can be used in actual implementations, for example, a plurality of units or components can be combined or integrated into another system, or some features can be ignored or unexecuted. Another point, the interacted coupling or directly coupling or communication connection displayed or discussed can be indirect coupling or communication connection via some ports, apparatus or units, and the form of the connection can be electrical, mechanical, or other types.

It needs to note that in regard to the above-mentioned method embodiments, for facilitating the description, the method embodiments are described to be composed of a series of motion combinations, however, it should be known to those skilled in the art that the present invention is not limited to the described motion sequences, because some steps can be executed according to other motion sequences or executed simultaneously according to the present invention. Secondly, it should be known to those skilled in the art that the embodiments described in the present invention are preferable embodiments, the motions and the modules relating thereto may be not necessary for the present invention.

In the embodiments of the present invention, the descriptions of the embodiments in the present invention are emphasized respectively, in regard to the part without detailed description in some embodiments, please refer to related description in other embodiments.

A vehicle detecting method, a mobile terminal, and an on-board terminal provided in the present invention are described above, for those skilled in the art, the detailed embodiments and the scope of the present invention will be modified according to the spirit of the embodiments of the present invention; in conclusion, the content of the specification should not be regarded as the limitation of the present invention.

## Claims

1. A method for vehicle detection, comprising: establishing a wireless connection between a mobile terminal and an on-board terminal of a vehicle, wherein, the on-board terminal is connected to an OBD of a vehicle;
via the mobile terminal, transmitting a vehicle diagnostic command to the vehicular vehicle;
via the mobile terminal, receiving vehicle operating status data from the on-board terminal, wherein, the vehicle operating status data includes a vehicle operating status result obtained by a diagnosis for the vehicle that is performed through the OBD and by the on-board terminal instructed by the vehicle diagnostic command; and
via the mobile terminal, generating a vehicle operating status report according to the vehicle operating status data.

2. The method according to claim 1, wherein via the mobile terminal, generating a vehicle operating status report according to the vehicle operating status data includes: via the mobile terminal, generating the vehicle operating status report in a PDF format according to the vehicle operating status data.

3. The method according to claim 1 or claim 2, wherein:
the on-board terminal is a golo3 device;
establishing the wireless connection between the mobile terminal and the on-board terminal includes: establishing a Wireless-Fidelity connection between the mobile terminal and the on-board terminal.

4. A method for vehicle detection, wherein the method comprises:
connecting an on-board terminal with an OBD of a vehicle;
establishing a wireless connection between the on-board terminal and a mobile terminal;
via the on-board terminal, receiving a vehicle diagnostic command from the mobile terminal;
via the on-board terminal, performing a diagnosis for the vehicle through the OBD to obtain a vehicle operating status result when the on-board terminal is instructed by the vehicle diagnostic command;
via the on-board terminal, transmitting a vehicle operating status data including the vehicle operating status result to the mobile terminal.

5. The method according to claim 1, wherein the on-board terminal is a golo3 device;
establishing the wireless connection between the mobile terminal and the on-board terminal includes: establishing a Wireless-Fidelity connection between the mobile terminal and the on-board terminal.

6. A mobile terminal, comprising: a first connecting module configured for establishing a wireless connection between the mobile terminal and an on-board terminal, wherein, the on-board terminal is connected to an OBD of a vehicle;
a first transmitting module configured for transmitting a vehicle diagnostic command to the on-board terminal;
a first receiving module configured for receiving vehicle operating status data from the on-board terminal, wherein, the vehicle operating status data includes a vehicle operating status result obtained by a diagnosis that is performed through the OBD of the vehicle and by the on-board terminal instructed by the vehicle diagnostic command; and
a generating module, configured for generating a vehicle operating status report according to the vehicle operating status data received from the first receiving module.

7. The mobile terminal according to claim 6, wherein the generating module is specifically configured for generating the vehicle operating status report in a PDF format according to the vehicle operating status data received by the first receiving module.

8. The mobile terminal according to claim 6 or claim 7, wherein:
the on-board terminal is a golo3 device;
the first connecting module is specifically configured for establishing a Wireless-Fidelity connection between the mobile terminal and the on-board terminal.

9. An on-board terminal, comprising:
a first connecting module configured for establishing a connection between the on-board terminal and an OBD of a vehicle;
a second connecting module configured for establishing a wireless connection between the on-board terminal and a mobile terminal;
a second receiving module configured for receiving a vehicle diagnostic command from the mobile terminal;
a diagnosing module configured for performing a diagnosis for the vehicle through OBD to obtain a vehicle operating status result when being instructed by the vehicle diagnostic command; and
a second transmitting module configured for transmitting vehicle operating status data including the vehicle operating status result to the mobile terminal.

10. The on-board terminal according to claim 9, wherein:
the on-board terminal is a golo3 device;
the second connecting module is specifically configured for establishing a Wireless-Fidelity connection between the on-board terminal and the mobile terminal.
